# EUROPÄISCHE PATENTSCHRIFT

(11) **EP 0 567 905 B1**
(45) Veröffentlichungstag und Bekanntmachung des Hinweises auf die Patenterteilung: **22.03.2000**
(21) Anmeldenummer: 93106421.6
(22) Anmeldetag: 21.04.1993
(51) Int. Cl.: H04B 7/08, G01S 13/82, H04B 1/54, G08G 1/017

(54) **System zur bidirektionalen Datenübertragung zwischen einer Bake und einem Fahrzeug**
A bidirectional data transmission system between a beacon and a vehicle
Système de transmission de données bidirectionelle entre une balise et un véhicule

(30) Priorität: 28.04.1992 DE 4213881
(43) Veröffentlichungstag der Anmeldung: 03.11.1993
(73) Patentinhaber: ROBERT BOSCH GMBH, 70442 Stuttgart (DE)
(72) Erfinder: Bode, Friedrich-Wilhelm, Dipl.-Ing., W-3054 Apelern (DE); Grabow, Wilhelm, Dipl.-Ing., Dr., W-3204 Nordstemmen (DE)

(56) Entgegenhaltungen:
- EP-A- 0 368 545
- DE-A- 2 743 370
- DE-A- 3 248 544
- FR-A- 2 465 232
- RUNDFUNKTECHNISCHE MITTEILUNGEN Bd. 25, Nr. 1, 1981, NORDERSTEDT DE TSCHIMPKE 'Mobiler UKW-Empfang in bebautem Gebiet and Empfangsverbesserung Durch Diversity'

## Beschreibung

### Stand der Technik

Die Erfindung geht aus von einem System zur bidirektionalen Übertragung von elektromagnetischen Datensignalen zwischen einer feststehenden Einrichtung und einer korrespondierenden Fahrzeugeinrichtung nach der Gattung des Hauptanspruchs. Es ist schon bekannt, für Anwendungen in der Verkehrsleittechnik Daten zwischen einer feststehenden Bake und einem vorbeifahrenden Fahrzeug auszutauschen. In der Veröffentlichung Proceedings of the Drive Conference: 'Advanced Telematics in Road Transport', Februar 4-6, 1991, Volume 1, wird im Rahmen des PAMELA-Projekts vorgeschlagen einen Datenaustausch im Mikrowellenbereich mit einem aktiven oder passiven Transponder durchzuführen. Dabei werden Daten von dem Bakengerät zum Sende- und Empfangsteil des Fahrzeuggerätes im sog. Downlink mittels amplitudenmodulierten Signalen übertragen. Die Datenübertragung vom Fahrzeug zur Bake erfolgt im Uplink-Betrieb nach dem Transponder-Prinzip. Dabei sendet die Bake ein unmoduliertes Trägersignal, das von dem Fahrzeuggerät empfangen wird. Dieses empfangene Signal wird mit den auszusendenden Daten frequenzmoduliert und wieder vom Bakengerät empfangen. Es hat sich jedoch herausgestellt, daß bei der Signalübertragung zwischen Bake und Fahrzeug die Wellenausbreitung auf direktem und indirektem Weg über Reflexionen an der Fahrbahn oder an anderen Fahrzeugen erfolgen kann. Dieses führt zu unerwünschten Interferenzen oder Fading. Bei der Mehrwegeausbreitung ist die Feldstärke deshalb stark vom Empfangsort und von der Frequenz abhängig. Eine sichere Datenübertragung ist dadurch nicht immer gewährleistet.

Die DE 27 43 370 A1 beschreibt ein Sekundärradar-Abfrage-Antwort-System, das mindestens zwei Antennen aufweist.

Die EP 0 368 545 A1 beschreibt ein System zur Datenübertragung zwischen einer stationären Einheit und einem Fahrzeug, wobei die stationäre Einheit Daten über zwei Antennen abstrahlt.

Der Artikel RUNDFUNKTECHNISCHE MITTEILUNGEN Bd. 25, Nr. 1, 1981, NORDERSTEDT DE TSCHIMPKE "Mobiler UKW-Empfang in bebautem Gebiet und Empfangsverbesserung durch Diversity" auf den Seiten 16 bis 20 beschreibt zwei Diversity-Verfahren, die eine Verbesserung der Empfangscharakteristik auch bei kleinen auf dem Kfz verwirklichbaren Antennenabständen ermöglichen.

### Vorteile der Erfindung

Das erfindungsgemäße System mit den kennzeichnenden Merkmalen des Hauptanspruchs hat demgegenüber den Vorteil, daß durch Verwendung von wenigstens zwei räumlich getrennten Antennen der Einfluß der Feldstärkeänderungen in Abhängigkeit vom Empfangsort weitgehend kompensiert wird. Tritt an einer Antenne ein lokales Minimum auf, dann kann bei geschickter Anordnung der zweiten Antenne ein lokales Maximum auftreten, so daß eine dieser Antennen zum Senden oder Empfangen besonders prädestiniert ist. Die Auswahl der geeigneten Antenne erfolgt durch die Auswerteschaltung bevorzugt auf der Basis der empfangenen Signale. Besonders vorteilhaft ist, daß die Auswerteschaltung im Downlink-Betrieb die von den Antennen empfangenen Signale addiert, so daß ein größerer Empfangspegel für die Datensignale verwertbar ist.

Durch die in den abhängigen Ansprüchen aufgeführten Merkmalen sind vorteilhafte Weiterbildungen und Verbesserungen des im Hauptanspruch angegebene Systems möglich.

Im Uplink-Betrieb wird zum Senden die Antenne ausgewählt, die dem höchsten Empfangspegel hatte und damit eine sichere Datenübertragung gewährleistet.

Günstig ist auch, daß der bidirektionale Datenaustausch nach dem Zeitmultiplex-Verfahren arbeitet, da bei jedem Zeitschlitz eine eindeutige Zuordnung zwischen Sende- und Empfangsbetrieb gewährleistet ist.

Um ein lokales Empfangsminimum möglichst zu vermeiden, ist die Veränderung des Abstandes oder der Höhe der Antennen besonders günstig.

Im Downlink-Betrieb ergibt sich eine Verbesserung der Signalauswertung durch Addition der beiden von den Antennen empfangenen Signale. Diese können auf einfache Weise einem Entscheider zugeführt werden, der beispielsweise als Komparator ausgebildet ist und die weitere Auswertung der Datensignale begünstigt.

Um im Uplink-Betrieb die Antenne mit den besten momentan günstigsten Übertragungseigenschaften auszuwählen, mißt die Auswerteschaltung zunächst die Amplitude des von der feststehenden Einrichtung gesendeten Signals und wertet dieses Mittels eines Komparators aus. Durch einfaches Umschalten der im Augenblick besten Sendeantenne wird eine besonders sichere Datenübertragung zur feststehenden Einrichtung erzielt. Um jedoch zu verhindern, daß während des Sendens und bei starker Änderung der Empfangseigenschaften die Antennen ungewollt umgeschaltet werden, ist es vorteilhaft, einen Zwischenspeicher vorzusehen, der das Umschalten während des Uplink-Betriebes verhindert.

Das System kann vorteilhaft verwendet werden für die Übertragung von Verkehrs- oder Navigationsdaten. Es kann auch verwendet werden zur automatischen Abbuchung von Straßenbenutzungsgebühren, ohne daß der Fahrer an einer Zahlstelle anhalten muß.

Weitere Vorteile der Erfindung sind der Beschreibung entnehmbar.

### Zeichnung

Ein Ausführungsbeispiel der Erfindung ist in der Zeichnung dargestellt. Es zeigen Figur 1 die prinzipielle Datenübertragung von der Bake zum Fahrzeug im Downlink-Betrieb, Figur 2 zeigt die Datenübertragung vom Fahrzeug zur Bake im Uplink-Betrieb gemäß dem semi-passiven Transponderprinzip. Figur 3 zeigt eine Auswerteschaltung, Figur 4 zeigt ein erstes Diagramm, Figur 5 zeigt ein zweites Diagramm, Figur 6 zeigt ein drittes Diagramm, Figur 7 zeigt ein viertes Diagramm.

### Beschreibung des Ausführungsbeispiels

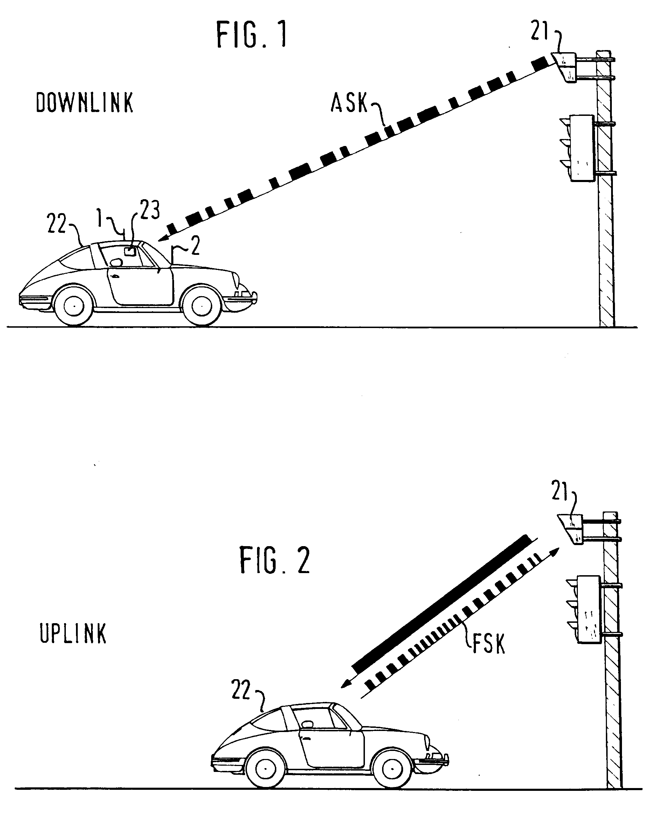

Figur 1 zeigt ein Kraftfahrzeug 22, das eine nicht näher dargestellte Fahrzeugeinrichtung 23 aufweist. Die Fahrzeugeinrichtung 23 ist mit Antennen 1, 2 verbunden. Die Antennen 1, 2 arbeiten beispielsweise im Mikrowellenbereich bei 5,8 GHz und stehen in Verbindung mit einer Bake 21, die als feststehende Einrichtung an einer Ampel oder einem Signalträger so befestigt ist, daß sie einen bestimmten Straßenabschnitt ausleuchten kann. Figur 1 zeigt weiter im Downlink-Betrieb die Signalübertragung von der Bake 21 zur Fahrzeugeinrichtung 23 mittels eines amplitudenmodulierten Datensignals ASK. Das Bakengerät 21 mit der ASK-Modulation ist per se bekannt, so daß sie nicht näher beschrieben werden muß. Ebenfalls bekannt ist die Fahrzeugeinrichtung 23 zur Auswertung des ASK-Signals. Eine derartige Empfangseinrichtung des Fahrzeuges wird als On-Board-Unit (OBU) üblicherweise bezeichnet.
Figur 2 zeigt das Kraftfahrzeug 22 im Uplink-Betrieb, d.h. die Fahrzeugeinrichtung 23 sendet nun nach dem semi-passiven Transponderbetrieb Datensignale zur Bake 21. Dazu sendet die Bake ein unmoduliertes Trägersignal (CW-Träger). Dieses Signal wird von der OBU empfangen und mit einem vom auszusendenden Datenstrom abhängigen frequenzmodulierten Signal (FSK-Signal) moduliert. Dies geschieht beispielsweise durch Umschalten bzw. Modulation der Reflektanz am Ausgang des Antennenelementes. Die Umschaltung der Reflektanz kann im einfachsten Fall durch die zum Empfang der Demodulation verwendeten Diode bewirkt werden. Das auf diese Weise modulierte Signal wird von einer der beiden Antennen des Fahrzeuggerätes 23 abgestrahlt und von der Bake 21 empfangen. Das verwendete semi-passive Transponderverfahren ist per se aus der Veröffentlichung Proceedings of the Drive Conference bekannt. Dieses Sende-/Empfangsverfahren hat den Vorteil, daß die Sende-/Empfangsschaltung sehr einfach und preiswert herstellbar ist. Ein weiterer Vorteil ist darin zu sehen, daß diese Sende-/Empfangseinrichtung eine nur kurze Reichweite hat, so daß andere Fahrzeuge oder deren Einrichtungen nicht gestört werden können.

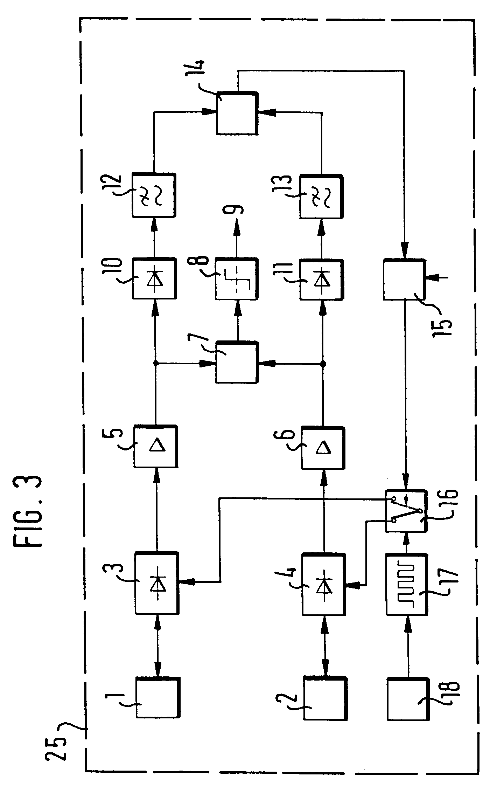

Figur 3 zeigt ein Blockschaltbild für eine Auswerteschaltung 25, die mit den beiden Antennen der Fahrzeugeinrichtung 23 verbunden ist. Jeweils eine Antenne ist mit einem Modulator/Demodulator 3, 4 verbunden. Der Ausgang jedes Modulators ist mit einem Verstärker 5, 6 verbunden, dessen Ausgangssignale zunächst auf einem Addierer 7 zusammengeführt sind. Der Ausgang des Addierers ist mit einem Entscheider 8 verbunden. Der Entscheider 8 wandelt mit Hilfe seines Komparators die anstehenden analogen Signale in digitale Signale um, die dann am Ausgang 9 als Downlink-Datenstrom für die weitere Datenverarbeitung zur Verfügung stehen.

Die Ausgänge der Verstärker 5, 6 sind desweiteren jeweils mit einem nachgeschalteten Gleichrichter 10, 11 mit eim Tiefpaß 12, 13 verbunden. Die beiden Ausgänge der Tiefpässe 12, 13 werden auf die Eingänge eines Komparatos 14 geführt. Der Ausgang des Komparators 14 ist mit einem Zwischenspeicher 15 verbunden, der wiederum einen Umschalter 16 steuert. Der Umschalter 16 steuert in Abhängigkeit vom Komparatorsignal 14 die Modulatoren 3, 4 für die Antennen 1, 2 im Uplink-Betrieb. Der Umschalter 16 überträgt Uplink-Daten, die von nicht dargestellten Datenspeichern 18 entnommen und an die Bake 21 gesendet werden sollen. Das Senden dieser Daten erfolgt nach dem zuvor beschriebenen semi-passiven Transponderprinzip mit einem FSK-Generator 17.

Die Baugruppen der Auswerteschaltung 25 weisen bekannte Schaltungen auf, so daß sie nicht im einzelnen beschrieben werden müssen.

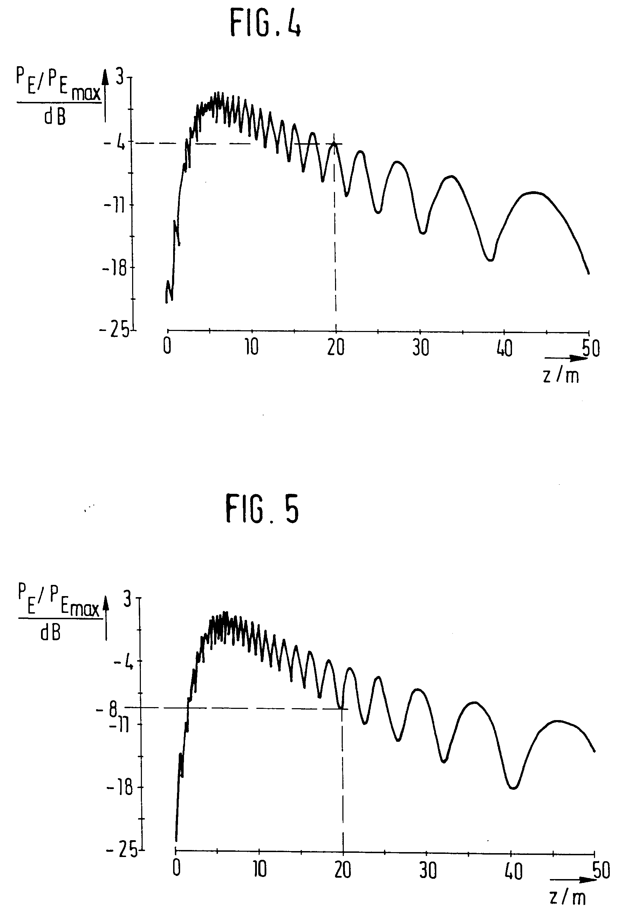

Im folgenden wird die Funktionsweise dieser Anordnung anhand der Figuren 4 bis 7 beschrieben. Es ist bekannt, daß die Fahrzeugeinrichtung mit einer Antenne ausgerüstet ist, die auf die Sendesignale der Bake 21 abgestimmt ist. Erfindungsgemäß wird nun vorgeschlagen, wenigstens zwei Antennen zu verwenden, die am Fahrzeug angeordnet sind und mit der Bake 21 in Verbindung stehen. Dabei ist wichtig, daß die Antennen zueinander einen vorgegebenen seitlichen Abstand haben, wobei auch ihre Höhe (Abstand der Antenne zur Fahrbahn) mit zu berücksichtigen ist. Zur Veranschaulichung zeigen die Figuren 4 bis 7 verschiedene Diagramme, bei denen die normierte Empfangsleistung der Antenne über den Abstand zur Bake 21 aufgetragen ist. Beispielsweise ist in Figur 4 eine oszillierende Kurve dargestellt, die bei einem Abstand von 20 m ein Maximum bei -4 dB aufweist. Bei dieser Meßanordnung ist die Antenne in einer Höhe von 1 m angeordnet. Die oszillierenden Schwingungen rühren von starken Reflexionen an der Fahrbahn und stören die Empfangsqualität bzw. Sicherheit der Datenübertragung beträchtlich. Denn wie aus Figur 5 ersichtlich ist, ist bei einer Antenne, die in 1,05 m Höhe angeordnet ist, bei sonst gleichen Bedingungen ein Minimum der Emfpangsleistung erkennbar. Die Dämpfung ist in diesem Fall mit ca. -8 dB besonders stark. Der geringe Höhenunterschied von nur 5 cm zeigt bei dieser Anordnung einer erhebliche Beeinträchtigung der Empfangsqualität der Antenne.

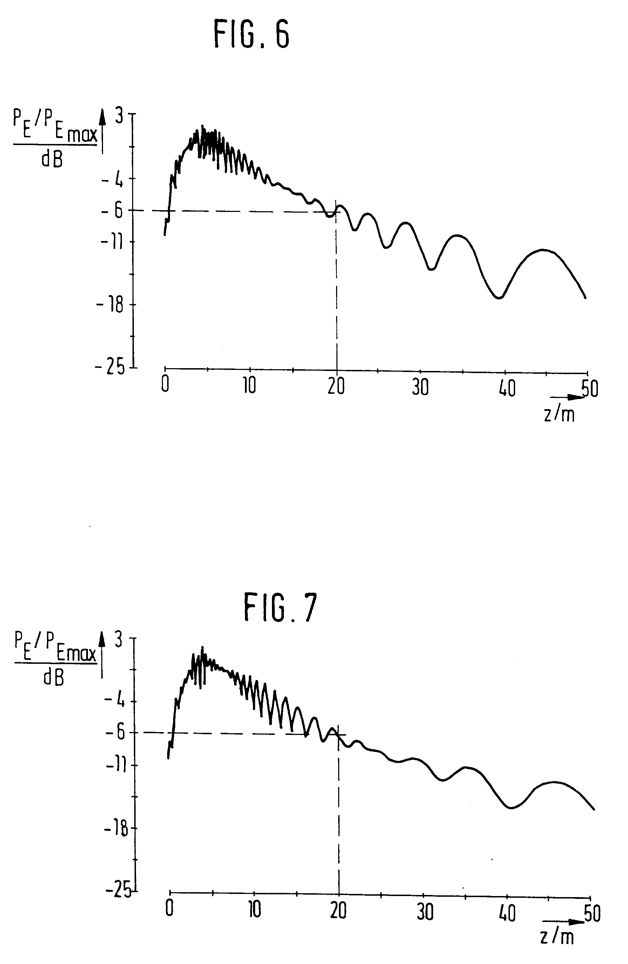

Werden nun erfindungsgemäß zwei Antennen 1, 2 verwendet, wobei eine Antenne in 1,0 m Höhe und die zweite Antenne in 1,05 m Höhe angeordnet ist, dann ergibt sich das in Figur 6 dargestellte dritte Diagramm der normierten Empfangsleistung. Ein ähnliches Ergebnis ergibt sich bei dem vierten Diagramm der Figur 7, bei dem die Antennen in 1,00 m und 1,08 m Höhe angeordnet sind. Diese beiden Diagramme der Figur 6, 7 weisen nicht mehr so starke oszillierende Schwingungen auf, wie diejenigen der Figur 4 und 5. Es zeigt sich, daß sich die Reflexionseinflüsse von der Straße nicht mehr so stark auswirken.

Daß die dargestellten Kurven der Diagramm 4 bis 7 zunächst ansteigen und dann abfallen liegt im wesentlichen daran, daß die Empfangsleistung in der Nähe der Bake am größten ist und mit zunehmendem Abstand abnimmt. Die Reichweite dieser Datenübertragung ist daher auf den Bereich der Bake auf vielleicht 50 m beschränkt, was durchaus wünschenswert ist.

Ändert man nunmehr den Abstand der beiden Antennen zueinander, ergibt sich eine ähnliche Beeinflussung der Empfangsleistung. In weiterer Ausgestaltung der Erfindung ist vorgesehen, daß auch mehrere Antennen, wie drei oder vier zum Empfang der Datensignale verwendbar sind.

Aufgrund der Amplitudenmodulation können die demodulierten Signale von den beiden Antennen 1, 2 schaltungstechnisch einfach addiert werden, wie Figur 3 entnehmbar ist. Die resultierende Signalleistung ist höher und besitzt eine geringere Welligkeit gegenüber der Verwendung eines einzelnen Antennenelementes. Wie den Figuren 6 und 7 entnehmbar ist, ist der Verlauf der normierten Signalleistung insbesondere im Bereich zwischen 10 m und 20 m in der Welligkeit erheblich geringer als die mit einem Einzelelement der Figuren 4 und 5. Durch geeignete Veränderung des vertikalen Abstandes der Antennen 1, 2 läßt sich so die Fahrbahnreflexion in einem bestimmten Entfernungsbereich zur Bake 21 derart optimieren, daß deren Welligkeit minimiert wird. Soll der Einfluß von Reflexionen an benachbarten Fahrzeugen verringert werden, so müssen die Antennen 1, 2 einen horizontalen Abstand besitzen, der ebenfalls eine Minimierung der Welligkeit ergibt. Durch Kombination des vertikalen und des horizontalen Abstandes der Antennen zueinander, wobei auch die Karosserieeigenschaften des Fahrzeuges mit einbezogen werden können, ergibt sich insgesamt für einen bestimmten Abstand zur Bake 21 eine minimale Welligkeit der Empfangsleistung.

Beim Uplink-Betrieb kann die Abstrahlung aber nicht gleichzeitig von den beiden Antennen 1, 2 erfolgen, da sonst bereits durch die Antennen ein Interferenzfeld erzeugt wird. Daher wählt die Auswerteschaltung 25 von den beiden Antennen 1, 2 diejenigen aus, die momentan die besten Empfangsdaten aufweist. Bei der hohen Trägerfrequenz von beispielsweise 5,8 GHz werden im Uplink-Betrieb nur wenige Millisekunden benötigt. Selbst ein schnelles Kraftfahrzeug legt in dieser Zeit eine Strecke von ca. 0,1 m zurück. Diese Abstandsänderung ist im Vergleich zum Abstand zur Bake relativ gering und kann vernachlässigt werden, wie die Figuren 6 und 7 zeigen. Bei einem Abstand zur Bake 21 von weniger als 10 oder 15 m ist die Empfangsleistung so groß, daß die Reflexionen ebenfalls vernachlässigt werden können.

Bei einem größeren Abstand von ca. 15 bis 30 m zur Bake ist jedoch die Auswahl der günstigsten Antenne für eine sichere Datenübertragung wichtig. Da nach dem Zeitschlitzverfahren zunächst im Downlink-Betrieb beide Antennen ihre Empfangssignale über die Demodulatoren 3, 4, die Verstärker 5, 6 und die Gleichrichter 10, 11 mit den nachgeschalteten Tiefpaßfiltern 12, 13 dem Komparator 14 zuführen, kann dieser durch einfachen Vergleich das größere Signale auswählen und eine entsprechende Information an einen Umschalter 16 weitergeben. Der Schalter 16 wählt nun die entsprechende Antenne aus, die im Uplink-Betrieb nunmehr die Fahrzeugdaten senden soll. Würde beispielsweise die Antenne 2 nach der Komparatorauswahl die bevorzugte Antenne sein, dann würde zunächst einmal das Komparatorsignal in dem Zwischenspeicher 15 gespeichert werden, damit der Umschalter 16 während des Uplink-Betriebes nicht umgeschaltet wird. Der Uplink-Datenstrom, der einem Speicher 18 des Fahrzeuggerätes entnommen wird, wird nun über einen FSK-Generator 17 frequenzmoduliert und über den Umschalter 16, den Modulator 4 auf die Antenne 2 geleitet. Die Antenne 2 strahlt nunmehr dieses frequenzmodulierte Signal ab, das von der Bake 21 empfangen wird.

Würde die Antenne 1 die besseren Empfangsdaten aufzeigen, dann würde der Umschalter 16 über den Modulator 3 auf die Antenne 1 umschalten, die das modulierte Signal dann abstrahlen würde.

Durch die Auswahl der Antenne mit der momentan besten Empfangsqualität wird eine sichere Datenübertragung zur Bake 21 gewährleistet.

Prinzipiell ist das vorgeschlagene System zur bidirektionalen Datenübertragung von der Modulationsart unabhängig, so daß auch eine andere Modulationsart, beispielsweise eine Phasenmodulation verwendbar ist.

## Patentansprüche

1. System zur bidirektionalen Übertragung von elektromagnetischen Datensignalen zwischen einer feststehenden Einrichtung (21), beispielsweise einer an einer Bake angeordneten Sende-/Empfangseinrichtung, und einer korrespondierenden Fahrzeugeinrichtung (23), wobei die feststehende Einrichtung (21) codierte Datensignale (ASK) an die Fahrzeugeinrichtung (23) sendet (Downlink-Betrieb) und die Fahrzeugeinrichtung (21) nach dem semi-passiven Transponderprinzip codierte Datensignale (FSK) an die feststehende Einrichtung (21) überträgt (Uplink-Betrieb), dadurch gekennzeichnet, daß die Fahrzeugeinrichtung (23) wenigstens zwei räumlich getrennte Antennen (1, 2) in einem vorgegebenen Abstand und eine Auswerteschaltung (25) für von den Antennen (1, 2) empfangene Datensignale aufweist, wobei
die Auswerteschaltung (25) im Downlink-Betrieb von den Antennen (1, 2) empfangene amplitudenmodulierte Signale addiert und das Summensignal auswertet.

2. System nach Anspruch 1, dadurch gekennzeichnet, daß die Auswerteschaltung (25) im Uplink-Betrieb die Datensignale über die Antenne (1, 2) abstrahlt, die zu Beginn des Uplink-Betriebs den höheren Pegel des von der feststehenden Einrichtung (21) zugeführten Trägersignals empfängt.

3. System nach einem der vorhergehenden Ansprüche, dadurch gekennzeichnet, daß die feststehende Einrichtung (21) und die Fahrzeugeinrichtung (23) ausgebildet sind, im Zeitmultiplex-Verfahren die codierten Datensignale zu senden bzw. zu empfangen.

4. System nach einem der vorhergehenden Ansprüche, dadurch gekennzeichnet, daß die feststehende Einrichtung (21) die Datensignale im Downlink-Betrieb nach der Amplitudenmodulation codiert und daß die Fahrzeugeinrichtung (23) im Uplink-Betrieb die Datensignale nach der Frequenzmodulation codiert.

5. System nach einem der vorhergehenden Ansprüche, dadurch gekennzeichnet, daß der seitliche Abstand der wenigstens zwei Antennen (1, 2) zueinander vorgebbar oder veränderbar ist.

6. System nach einem der vorhergehenden Ansprüche, dadurch gekennzeichnet, daß die Höhe über der Fahrbahn der wenigstens zwei Antennen (1, 2) zueinander vorgebbar oder veränderbar ist.

7. System nach einem der vorhergehenden Ansprüche, dadurch gekennzeichnet, daß die Auswerteschaltung (25) für jede Antenne (1, 2) einen Demodulator/Modulator (3, 4) aufweist, daß im Downlink-Betrieb ein Addierer (7) die demodulierten Signale addiert und einem Entscheidet (8) zuführt und daß der Entscheider (8) ausgebildet ist, die zugeführten Signale für die weitere Datenverarbeitung zu digitalisieren.

8. System nach Anspruch 7, dadurch gekennzeichnet, daß die Auswerteschaltung (25) ausgebildet ist, zu Beginn des Uplink-Betriebes die von den Antennen (1, 2) empfangenen Signale der feststehenden Einrichtung (21) mittels eines Komparators (14) bezüglich der maximalen Amplitude zu vergleichen und dann für die Uplink-Datensignale die Antenne auszuwählen, die die besten Empfangssignale hatte.

9. System nach Anspruch 8, dadurch gekennzeichnet, daß die Auswerteschaltung (25) einen Speicher (15) aufweist, der ein Umschalten der Antennen (1, 2) während des Uplink-Betriebes verhindert.

10. System nach einem der vorhergehenden Ansprüche, dadurch gekennzeichnet, daß das System zur Übertragung von Verkehrs-, Navigationsdaten und/oder für die Abrechnung von Benutzungsgebühren verwendbar ist.

## Claims

1. System for bidirectional transmission of electromagnetic data signals between a fixed device (21), for example a transceiver arranged on a beacon, and a corresponding vehicle device (23), the fixed device (21) sending coded data signals (ASK) to the vehicle device (23) (downlink operation), and the vehicle device (21) transmitting coded data signals (FSK) to the fixed device (21) using the semi-passive transponder principle (uplink operation), characterized in that the vehicle device (23) has at least two spatially separated antennas (1, 2) at a prescribed spacing and an evaluation circuit (25) for data signals received by the antennas (1, 2), the evaluation circuit (25) adding amplitude-modulated signals received in downlink operation by the antennas (1, 2) and evaluating the aggregate signal.

2. System according to Claim 1, characterized in that the evaluation circuit (25) emits the data signals in the uplink operation via the antenna (1, 2), which at the start of the uplink operation receives the higher level of the carrier signal fed from the fixed device (21).

3. System according to one of the preceding claims, characterized in that the fixed device (21) and the vehicle device (23) are designed to send and receive the coded data signals using the time-division multiplex method.

4. System according to one of the preceding claims, characterized in that the fixed device (21) codes the data signals in the downlink operation according to the amplitude modulation, and in that the vehicle device (23) codes the data signals in the uplink operation according to the frequency modulation.

5. System according to one of the preceding claims, characterized in that the lateral spacing of the at least two antennas (1, 2) relative to one another can be prescribed or variable.

6. System according to one of the preceding claims, characterized in that the height above the roadway of the at least two antennas (1, 2) relative to one another can be prescribed or varied.

7. System according to one of the preceding claims, characterized in that the evaluation circuit (25) has a demodulator/modulator (3, 4) for each antenna (1, 2), in that in the downlink operation an adder (7) adds the demodulated signals and feeds them to a decision circuit (8), and in that the decision circuit (8) is designed to digitize the said signals for further data processing.

8. System according to Claim 7, characterized in that the evaluation circuit (25) is designed to compare the signals, received by the antennas (1, 2), of the fixed device (21) at the start of the uplink operation by means of a comparator (14) with reference to the maximum amplitude, and then to select for the uplink data signals the antenna which had the best received signals.

9. System according to Claim 8, characterized in that the evaluation circuit (25) has a memory (15) which prevents the antennas (1, 2) from switching over during the uplink operation.

10. System according to one of the preceding claims, characterized in that the system can be used for transmitting traffic data and navigation data and/or for deducting utilization charges.

## Revendications

1. Système de transmission bidirectionnelle de signaux de données électromagnétiques entre une installation fixe (21) par exemple une installation d'émission/réception équipant une borne et une installation correspondante (23) à bord d'un véhicule,
l'installation fixe (21) émettant des signaux de données codés (ASK) à l'installation (23) du véhicule (fonctionnement descendant) et l'installation à bord du véhicule (21) transmettant, selon le principe du transpondeur semipassif, les signaux de données codés (FSK) à l'installation fixe (21) (sens montant),
caractérisé en ce que
l'installation embarquée dans le véhicule (23) comporte au moins deux antennes (1, 2) séparées dans l'espace, suivant une distance prédéterminée, et un circuit d'exploitation (25) pour les signaux de données reçus par l'antenne (1, 2),
le circuit de traitement (25) additionnant les signaux à modulation d'amplitude reçus par les antennes (1, 2) dans le mode descendant et exploitant le signal de somme.

2. Système selon la revendication 1,
caractérisé en ce que
le circuit d'exploitation (25) émet, dans le sens remontant, les signaux de données par les antennes (1, 2) qui, au début du fonctionnement en sens montant, reçoivent le niveau le plus élevé du signal de porteuse fourni par l'installation fixe (21).

3. Système selon l'une des revendications précédentes,
caractérisé en ce que
l'installation fixe (21) et l'installation (23) du véhicule sont réalisées pour émettre ou recevoir les signaux de données codés selon le procédé de multiplexage dans le temps.

4. Système selon l'une des revendications précédentes,
caractérisé en ce que
l'installation fixe (21) code les signaux de données en mode descendant après modulation d'amplitude et
l'installation du véhicule (23) code en mode ascendant les signaux de données après modulation de fréquence.

5. Système selon l'une des revendications précédentes,
caractérisé en ce que
la distance latérale entre au moins les deux antennes (1, 2) est prédéterminée ou variable.

6. Système selon l'une des revendications précédentes,
caractérisé en ce que
la hauteur d'au moins deux antennes (1, 2) par rapport à la chaussée est prédéterminée ou variable.

7. Système selon l'une des revendications précédentes,
caractérisé en ce que
le circuit d'exploitation (25) comporte pour chaque antenne (1, 2) un démodulateur/modulateur (3, 4),
en mode descendant, un additionneur (7) additionne les signaux démodulés et les applique à un circuit de décision (8) et
- le circuit de décision (8) est réalisé pour numériser les signaux reçus pour la suite du traitement des données.

8. Système selon la revendication 7,
caractérisé en ce que
le circuit d'exploitation (25) est réalisé pour qu'au début du mode de transmission remontant, les signaux reçus par les antennes (1, 2) de l'installation fixe (21) sont comparés par un comparateur (14) pour déterminer l'amplitude maximale et pour sélectionner l'antenne pour les signaux de données de sens montant, correspondant aux meilleurs signaux de réception.

9. Système selon la revendication 8,
caractérisé en ce que
le circuit d'exploitation (25) comporte une mémoire (15) qui évite la commutation des antennes (1, 2) pendant le mode de liaison remontant.

10. Système selon l'une des revendications précédentes,
caractérisé en ce que
le système est appliqué à la transmission de données de circulation ou de navigation et/ou pour la facturation de taxes d'utilisation.
